# EUROPEAN PATENT APPLICATION

(11) **EP 1 498 302 A2**
(43) Date of publication of application: **19.01.2005**
(21) Application number: 04016682.9
(22) Date of filing: 15.07.2004
(51) Int. Cl.: B60N 2/235, B60N 2/44

(54) **Adjusting mechanism for a support structure**

(30) Priority: 15.07.2003 DE 10332102
(71) Applicant: FICO CABLES LDA, 4471 Maia (PT)
(72) Inventor: Da Silva Lopes, Pedro Joao, 4470-263 Vermoim, Maia (PT)
(74) Representative: Hess, Peter K., Dipl.-Phys.

(57) **Abstract**

An adjusting mechanism for a support structure in a seat of a vehicle comprising a first rotatable adjusting means and at least one engaging means 50 which is displaceable by means of the rotation of said adjusting means 40 from an initial position to an end position in such a way that it engages a second rotatable adjusting means in the end position wherein by means of the rotation of the first adjusting means 40, first the engaging means 50 is engageable with the second adjusting means 20 by a linear motion and then the second adjusting means 20 is adjustable.

## Description

### 1. Field of the invention

The present invention relates to an adjusting mechanism for a support structure in seats of vehicles.

### 2. Background of the invention

In order to enhance the comfort of a seat of a vehicle, in particular of a back of a seat of a vehicle, different support structures are installed in these backs of seats. These support structures are mostly adapted to the back shape of the seated person in order to provide this person on the one hand a rest and on the other hand a sufficient support for the natural back shape. Such support structures are mostly predetermined in their shape and they only slightly give way based on their resilient properties. Other support structures are adaptable by means of an adjusting mechanism to different needs of the seated person.

By means of known adjusting mechanisms, on the one hand the arcing of the support structure, particularly in the area of the lumbar spine, can be adapted. A further function of these adjusting mechanisms consists in the shifting of the support structure in height parallel to the running direction of the backbone. In this manner, it is possible to optimally adapt the support structure of the back of a seat to seated persons having different size.

Constructions of seats of vehicles comprise an adjustably mounted back of a seat wherein the slope of which can be adapted to the needs of the seated person by means of a mechanism. These mechanisms are described in the WO 02/058958 A1. First, these mechanisms release the arrested connection between the back of the seat and the seating to enable an adjusting. As soon as the desired position has been adjusted, these mechanisms arrest or block the back of the seat of the vehicle so that even in the case of an accident of the vehicle, security risks for the seated person are minimized.

Compared to the above mentioned mechanisms for the back of a seat, also adjusting mechanisms for the inner support structure are realized in seats of vehicles. These adjusting mechanisms serve for the adjustment of arching mechanics mostly arranged in the area of the back of a seat. These adjusting mechanisms for the support structures serve for the task to enable a step-by-step adjusting to the desired position of the support structure so that no or not only an arresting is realized, but mainly an adjusting movement is transmitted to the support structure to be adjusted.

Different adjusting mechanisms for the back of a seat in vehicle seats are disclosed in the US-A-4 805 481, the US-A-2 395 576 and in the US-A-4 143 905. The US-A-4 805 481 discloses a space consuming adjusting mechanism since the driving motion and the adjusting motion are transmitted via remotely of each other arranged pivot axis. A more compact arrangement is described in the remaining US patents. In these arrangements, the adjusting mechanism is adjusted from an initial position in which no adjusting is possible, to an engaging position, in which an adjusting is possible, via a main pivot axis. Subsequently, an adjusting of the back of the seat is realized by means of the continuing rotation around the main pivot axis while the adjusting mechanism is still in the engaging position. As soon as the adjusting process is finished, i.e. the rotation around the main pivot axis ends, the adjusting mechanism is returned to the initial position by a slight opposite rotating around the main pivot axis compared to the previous rotation.

The crossover from the initial position to the engaging position of the adjusting mechanism is realized by the coupling of a rotation around the main pivot axis to a rotation around different additional axis. The rotation around the additional axis engages the engagement means of different construction with an outer adjusting element. The provision of different additional axis is connected to high constructive efforts and thus also to high manufacturing efforts. Besides this manufacturing effort, the main axis and the additional axis have to be expensively serviced in order to guarantee a long lasting functioning of the adjusting mechanism. Additionally, the adjusting mechanisms disclosed in the above mentioned US patents consist of a plurality of components, thus the assembly of which is also very time-consuming. Further, the plurality of components leads to a high weight of the adjusting mechanisms which especially in vehicles affects the fuel consumption and the consideration of security risks in the case of an accident.

It is therefore the technical problem of the present invention to provide an adjusting mechanism for a support structure in a seat of a vehicle which is constructively simply configured, which can be manufactured with limited efforts and which requires less maintenance.

### 3. Summary of the invention

The above problem is solved by an adjusting mechanism as defined in claim 1.

This adjusting mechanism for support structures, in particular a back support in a back of a seat, of a vehicle according to the present invention comprises a first rotatable adjusting means and at least an engaging means displaceable from an initial position to an end position by means of the rotation of the adjusting means in such a way that it engages a second rotatable adjusting means in the end position wherein by the rotation of the first adjusting means first the engaging means is engageable with the second adjusting means by means of a linear motion and then the second adjusting means is adjustable.

The adjusting mechanism according to the present invention is actuated by the rotation around the main pivot axis, i.e. by the rotation of the first adjusting means around the pivot axis. This rotation first induces a linear motion by means of which a positive connection is realized between the first adjusting means and the second rotatably adjusting means. This linear motion or this coupling motion is realized by a construction with low constructive efforts. For the realization of the positive connection between the first and the second adjusting means, preferably according to the invention at least one engaging means is displaced along a linear way from an initial position to an end position. It is also preferred according to the invention to exploit a displacement along a curvilinear way if in this manner a space saving and effective adjusting mechanism can be provided. The linear motion of the at least one engaging means is realized preferably according to the invention starting from the pivot axis of the first engaging means in a radial direction. Further, also other directions are preferred according to the invention which lead to a connection between the first and the second adjusting means. Preferably according to the invention, a positive connection is used in the adjusting mechanism between the second rotatable adjusting means and the engaging means. Dependent on the force to be transmitted and the length of the ways to be realized by the adjusting mechanism, also non-positive connections are preferred. While the positive connection is preferably according to the invention realized by means of engaging teeth or projections, the non-positive connections are preferably according to the invention realized for example by the effect of frictional forces or the like.

According to a further preferred embodiment of the present invention, the first adjusting means comprises at least one cam-like projection and at least one recess so that the engaging means engages in an initial position with the first projection into the recess of the first adjusting means and in an end position with at least one second projection into the second adjusting means wherein by the rotation of the first adjusting means, the engaging means is engageable with the second adjusting means by means of the cooperating of the cam-like projection with the first projection of the engaging means.

According to a first preferred embodiment of the present invention, the first rotatable adjusting means comprises a wave-shaped run of its circumference. This wave-shaped run includes at least one elevation or a projection having a certain radius and a minimum or a recess having a smaller radius compared to the radius of the projection. In this case, the radius is determined starting from the pivot axis of the first rotatable adjusting means. Based on the wave-shaped circumferential shape of the first adjusting means, projections which preferably according to the invention abut at this wave-shaped circumferential shape, are differently strong moved outwardly dependent on the change of the radius of the first adjusting means. By this construction and the cooperating of the cam at the wave-shaped circumferential plane, preferably according to the invention the linear motion of the engaging means is realized with low constructive efforts. To this end, the engaging means comprises at its side directed to the first adjusting means a first projection engaging the recess or the minimum of the first adjusting means respectively abutting at this position of the circumferential plane of the first adjusting means in the initial position of the first adjusting means. By the rotation of the first adjusting means, the first projection of the engaging means moves along the circumferential plane of the first adjusting means and in this manner it is pressed outwardly when it moves out of the at least one recess along the outer plane of the cam-like projection. The thereby achieved linear movement of the engaging means leads to an approach between the second adjusting means and the engaging means until both engage each other. This engaging each other realizes the positive connection already mentioned above since corresponding projections or teeth are provided at the opposite sides of the second adjusting means and the engaging means. In case of the realization of a non-positive connection between the second adjusting means and the engaging means, preferably according to the invention planes having high frictional coefficients would abut at each other in the end position and they would guarantee in this manner a connection between the first adjusting means and the second adjusting means via the engaging means.

According to a further preferred embodiment of the present invention, the second projection of the at least one engaging means is a first teeth profile complementary shaped to a second teeth profile of the second adjusting means.

Similar to the configuration of teeth along the circumference of a gear, the opposed sides of the second adjusting means and the engaging means comprise profiles complementary shaped to each other. It is also preferred according to the invention that other profiles are formed at these planes as long as they guarantee a reliable positive connection by means of which the ways as well as the forces can be transmitted. It is further preferred according to the invention that the second adjusting means is bowl-like configured for receiving the first adjusting means and the at least one engaging means comprising a bowl bottom as well as a bowl edge. This bowl edge comprises preferably according to the invention at its inner side the above mentioned second teeth profile.

In order to provide a space saving and lightweight arrangement, the second adjusting means is shaped in such a way that the first adjusting means as well as the at least one engaging means can be received therein. In this manner, a compact arrangement is formed minimizing the space requirements of the adjusting mechanism and, thus, it is configured in the sense of vehicle constructions. To assure an optimal force and way transmission in spite of the space saving construction, the above mentioned teeth profile is formed at the inner side of the bowl-like construction. Therefore, this bowl-like construction of the second adjusting means has to be just so big that the first adjusting means and the engaging means can be arranged therein and that only a short adjusting way for the engaging means is necessary in order to establish the connection between the first and the second adjusting means.

According to a further preferred embodiment of the present invention, the adjusting mechanism further comprises a first pivotable shaft connected to the first adjusting means on which a guiding plate is rotatably mounted at which the at least one engaging means is guided.

In order to actuate the first adjusting means and, thus, the whole adjusting mechanism, the first adjusting means is connected to a pivotable shaft preferably according to the invention establishing a connection to an actuating lever. This pivotable shaft and its pivot axis define the main pivot axis around which the first adjusting means and the whole adjusting mechanism mainly rotates. In order to further guarantee preferably according to the invention an effective motion of the at least one engaging means, the at least one engaging means is displaceably mounted on a rotatable guiding plate. This displacement is preferably according to the invention realized by guidings provided at the side of the guiding plate and oriented in the direction of the second adjusting means. It is further preferred according to the invention to realize the guiding of the at least one engaging means by pins arranged at the engaging means and engaging the guiding grooves of the guiding plate. Also all further guiding constructions are preferred according to the invention as long as they guarantee an effective operation of the at least one engaging means. The guiding plate serves also for the rotation of the at least one engaging means around the main pivot axis in a certain adjusting stage of the adjusting mechanism besides thew guiding of the at least one engaging means. Because of this reason, the guiding plate comprises preferably according to the invention a central opening and it is rotatably mounted on the first shaft which also actuates the first adjusting means.

According to a further preferred embodiment of the present invention, the at least one engaging means is resettable by at least one reset spring from an end position to the initial position at the guiding plate.

As already described above, the engaging means is preferably according to the invention moved by means of a cam-like projection in the direction of the second adjusting means so that preferably according to the invention a positive connection is formed between both components. The engaging means is then situated in the end position from which it can be displaced backwardly to the initial position as soon as the cam-like projection of the first adjusting means no longer presses outwardly the engaging means. This resetting motion of the engaging means from the end position to the initial position is preferably according to the invention realized by means of a mechanical prestress induced by at least one reset spring which draws back the at least one engaging means in the direction of the initial position. Preferably according to the invention, coil springs are used as reset springs which can be hooked in the at least one engaging means with low constructive efforts. The second point for the mounting of the reset spring is preferably according to the invention provided by the arrangement of a second engaging means symmetrically arranged to the pivot axis of the first adjusting means opposite to the first engaging means. If the preferred both opposite engaging means according to the invention are no longer kept outwardly in the end position by means of two symmetrically acting cam-like projections, they are reset by the effect of the at least one reset spring to their initial positions.

According to a further preferred embodiment of the present invention, the guiding plate comprises at least one limiting projection limiting the rotation of the guiding plate around the first shaft. Furthermore preferred according to the invention, the adjusting mechanism comprises a housing having at least one arc-shaped guiding opening receiving the at least one limiting projection whereby the rotation of the guiding plate is limited in both directions.

Preferably according to the invention, only small adjusting ways are allowed by the adjusting mechanism. These adjusting ways or adjusting angles, since the adjusting is realized by means of a rotation, comprise preferably according to the invention 45°. It is however also preferred according to the invention to enlarge or to reduce this adjusting angle as long as in this manner an adaptation of the adjusting mechanism is realized to the support structure to be adjusted in the seat of a vehicle. To first enable an adjusting, the at least one adjusting means is engaged with the second adjusting means or a positive connection to the second adjusting means is realized by the first part of the rotation of the first adjusting means. The second part or the remainder of the possible rotation of the first adjusting means is then preferably according to the invention used for the adjusting of the second adjusting means. Therefore, the guiding plate does not rotate around the first shaft while executing the linear motion of the at least one engaging means wherein the first shaft moves the first adjusting means. Only if the at least one engaging means is connected to the second adjusting means, the guiding plate also follows preferably according to the invention the rotation of the first shaft and of the first adjusting means. The extent of this adjusting rotation is limited by the guiding of at least one limiting projection of the guiding plate within an arc-shaped guiding opening of the housing of the adjusting mechanism. Within this arc-shaped guiding opening, the limiting projection is preferably according to the invention centrally arranged in its initial position so that the same adjusting way respectively the same adjusting movement is possible in both directions in the same extent.

According to a further preferred embodiment of the present invention, the adjusting mechanism comprises at least one positioning spring connected to the housing and to at least one limiting projection to position the guiding plate.

The preferred middle position according to the invention already mentioned above of the at least one limiting projection within the arc-shaped guiding opening of the housing is guaranteed by the effect of the at least one positioning spring. This positioning spring is arranged in such a way that it resets the limiting projection to this neutral position independent from the direction in which it was moved before. Preferably according to the invention, at this position also coil springs are installed wherein however also all other spring constructions are preferred according to the invention providing the same purpose.

According to a further preferred embodiment of the present invention, the second adjusting means is connected to the second shaft by means of which the support structure is adjusted.

The adjusting motion of the adjusting mechanism is preferably according to the invention transmitted starting from the second adjusting means by means of a second shaft to the respective back support. This second shaft has preferably according to the invention a four-cornered shape so that a positive connection can be realized for example with further components of the back support.

The present invention further relates to a method for adjusting a supporting structure of a seat of a vehicle, comprising the following steps: Rotating a first adjusting means having at least one cam-like projection from an initial position around a first angle so that an engaging means cooperating with said cam-like projection is displaced from an initial position to an end position by a linear motion and thereby a connection is realized between the first and a second adjusting means, rotating the first adjusting means around a second angle so that the second adjusting means is commonly displaced with the first adjusting means and automaticaly rotating backwardly of the first adjusting means to the initial position.

### 4. Short description of the accompanying drawings

The present invention is described with reference to the accompanying drawings. It shows:
- Fig. 1: an exploded illustration of the adjusting mechanism according to a preferred embodiment of the present invention;
- Fig. 2: the illustration of the adjusting mechanism according to a preferred embodiment of the present invention in a middle position or in an initial position;
- Fig. 3: the adjusting mechanism according to a preferred embodiment of the present invention in a maximum adjusting position;

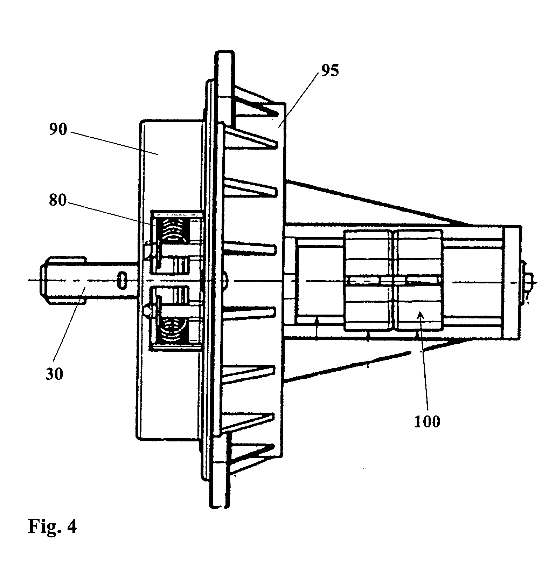

- Fig. 4: the adjusting mechanism according to a preferred embodiment of the present invention in a side view;

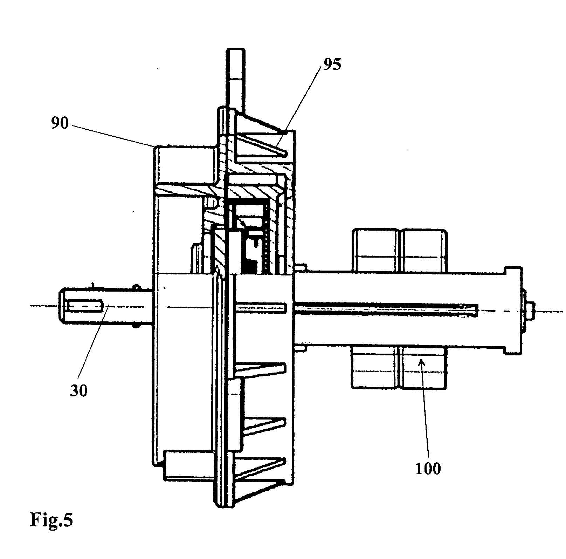

- Fig. 5: the adjusting mechanism according to a preferred embodiment of the present invention in a side view and in a partly sectional view.

### 5. Detailed description of the preferred embodiments

The adjusting mechanism according to the present invention serves for the adjustment of support structures in seats of vehicles. Preferably, this adjusting mechanism is used for the adjustment for back supports, as for example spine supports, in backs of a seat of a vehicle. It is, however, also preferred according to the invention to install this adjusting mechanism in other seats as long as the provided technical construction realizes a solution for the adjusting way to be executed.

The preferred adjusting mechanism according to the invention carries out a step-by-step adjusting process. The maximum step size in which the adjustment is carried out, is determined in this case by the adjusting mechanism wherein the actual step size can be also smaller, as desired by the actuating person. The adjusting mechanism only provides a limited motional freedom in the one or the other adjusting direction whereby the maximum adjusting steps or intervals are defined. Although the actuation of the adjusting mechanism is a step-by-step process, the adjustment of the connected support structure is continuously executed by the adjusting mechanism according to the invention.

The above mentioned step-by-step adjustment is realized by the adjusting mechanism according to the invention in two stages. To this end, the adjusting mechanism comprises preferably according to the invention adjusting elements which provide an adjusting motion, and elements to be adjusted to which this adjusting motion is to be transmitted and which should carry out this adjusting motion. Adjusting elements are to this end preferably according to the invention connected to a lever or to an electrical moving unit while the elements to be adjusted are connected to support structures to be adjusted, for example in the back of a seat of a vehicle. In the first stage carried out by the adjusting mechanism, first an access of the adjusting elements takes place to the elements to be adjusted. Access means in this connection that the adjusting elements are coupled to the elements to be adjusted, i.e. that a connection is realized between the same. This connection is preferably according to the invention realized by a releasable connection either guaranteed by a positive or by a non-positive connection. In the second stage, after the connection between the adjusting elements and the elements to be adjusted has been established, the actual adjusting motion is carried out. In this stage, therefore the element to be adjusted will execute the motion of the adjusting element or a similar motion based on the connection between the adjusting element and the element to be adjusted and it will preferably according to the invention transmit this motion to a support structure in a back of a seat of a vehicle. It follows therefrom that the adjusting mechanism according to the invention is not used for arresting moveable parts or for blocking of parts which want to move in a certain initial position. The adjusting mechanism serves for the transmission of adjusting movements in the one or the other direction wherein based on the construction according to the invention of the adjusting mechanism a decoupling between the adjusting elements and the elements to be adjusted is realized so that not already the slightest movement of the adjusting elements lead to an adjustment of the support structure in the seat of a vehicle.

Preferably according to the invention, a rotation is the basic adjusting movement. This rotation is executed around the pivot axis of the first 30 and the second shaft 10 as explained in more detail below. The rotation of the first shaft 10 generates based on the preferred construction according to the invention of the adjusting mechanism a translation or a linear movement or the above mentioned connection between the adjusting elements and the elements to be adjusted. This connection or a coupling serves for assuring the adjustment of the support structure in the back of a seat of a vehicle since small actuation motions, for example by a lever, not yet lead to an adjusting of the support structure. These small motions, which should not be transmitted, are not sufficient to establish a connection between the adjusting elements and the elements to be adjusted respectively to complete the coupling linear motion.

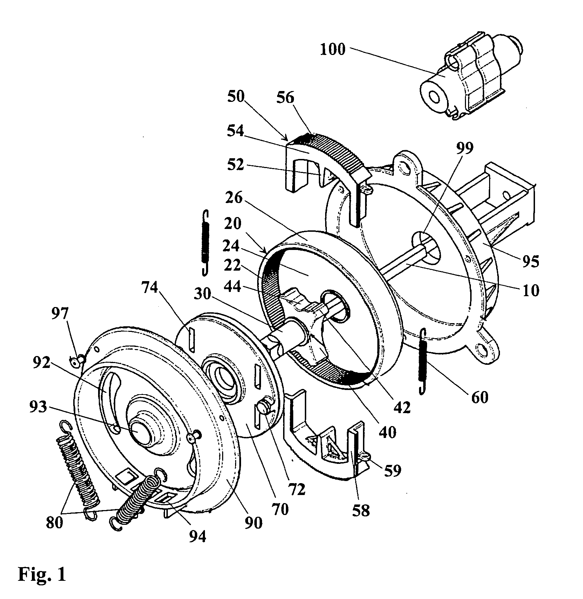

The adjusting mechanism according to a preferred embodiment of the present invention is shown in an exploded view in Figure 1. It comprises a first shaft 30 connected to a first adjusting means 40. The first shaft 30 serves for mounting a lever or for establishing a connection in order to feed the adjusting mechanism according to the invention with an adjusting motion. Besides the preferred use according to the invention of a lever (not shown), also a rotating knob or electrical regulating apparatus can be connected to this shaft 30.

The above mentioned first adjusting means 40 has preferably according to the invention the shape of the star wheel or it is configured like a star or in similar shapes. It is also preferred according to the invention that the adjusting means 40 is formed having a wave-shaped or a sinusoidal circumferential configuration. By this wave shape or sinusoidal shape of the circumference of the adjusting means 40, at least one cam-like projection 42 and a recess 44 are formed.

This preferred circumferential configuration according to the invention of the first adjusting means 40 cooperates with an engaging means 50. This engaging means 50 realizes a double function. Based on the constructive configuration of the engaging means 50, the same on the one hand engages the circumferential configuration of the first adjusting means 40 and on the other hand it engages a second rotatable adjusting means 20 preferably according to the invention formed like a teethed ring (see below). The engaging means 50 comprises preferably according to the invention two symmetrically arranged outer guiding arms 58 and an engaging cam 52. This engaging cam 52 cooperates with the circumferential configuration of the first adjusting means 40. In case the adjusting mechanism according to the invention is in its initial position, the engaging cam 52 engages the circumferential plane of the first adjusting means 40 at the position of the recess 44. In the course of the adjusting motion to be transmitted by the adjusting mechanism, the first shaft 30 and thus the first adjusting means 40 are rotated. In the course of this rotation, the engaging cam 52 travels along the circumferential configuration of the first adjusting means 40 out of the recess 44 onto the cam-like projection 42. Based on this motion of the engaging cam 52 along the circumferential configuration of the first adjusting means 40, the engaging means 50 moves preferably according to the invention outwardly in a radial direction starting from the pivot axis of the first adjusting means 40 or of the first shaft 30.

By this linear motion in the radial direction, the engaging means 50 moves in the direction of the second rotatable adjusting means 20 or of the teethed ring 20 until a positive or a non-positive connection is established between the same.

Preferably according to the invention, a positive connection is realized between the teethed ring 20 and the engaging means 50. Thus, the side of the engaging means 50 directed to the teethed ring 20 comprises preferably according to the invention a circular arc-like segment 54. The radius of this circular arc-like segment 54 is preferably according to the invention adapted to the radius of the teethed ring 20. This constructive configuration guarantees a preferred large surface abutment according to the invention of the engaging means 50 at the teethed ring 20. By this large surface abutment, an optimal force transmission is guaranteed and the adjusting mechanism according to the invention is not overloaded by the adjusting motion.

In order to realize a positive connection between the teethed ring 20 and the circular arc-shaped segment 54, the outer surface 56 of the circular arc-shaped segment 54 comprises a teethed profile complementary shaped to the teethed profile of the teethed ring 20. The teethed ring 20 is preferably according to the invention bowl-like configured, i.e. it comprises a bowl bottom 24 and a bowl edge 26. On the inner side 22 of the bowl edge 26, preferably according to the invention the above mentioned teethed profile is configured. Based on this constructive arrangement, the abutment respectively the engagement of the circular arc-shaped segment 54 is realized at the inner side 26 of the teethed ring 20.

As already mentioned above, a positive connection between the engaging means 50 and the teethed ring 20 is preferred according to the invention. Beside the teethed surface configuration similar to gears engaging each other, also other profiles are however preferred according to the invention which guarantee a reliable connection as well as a transmission of movements. It is also preferred according to the invention to realize a non-positive connection between the engaging means 50 and the second rotatable adjusting means 20. In this case, the surfaces abutting each other of the engaging means 50 and the second adjusting means 20 has to provide a sufficient friction in order to use the non-positive connection for the transmission of movements. In this conjunction, it is also preferred according to the invention that the engaging means 50 is pressed against the second adjusting means 20 with a sufficiently high force by the first adjusting means 40 so that a reliable non-positive connection is realized.

Independent of the type of connection realized between the engaging means 50 and the second adjusting means 20, a transmission of the adjusting motion of the lever (not shown) or of the first shaft 30 is realized to the adjusting support structure or the second shaft 10. It follows therefrom that the above mentioned connection forms the basis for further transmission of the adjusting motion.

Preferably according to the invention, two symmetrically arranged engaging means 50 are used in the present adjusting mechanism. The number of engaging means 50 and their arrangement depends on the force to be transmitted. Thus, also only one or several engaging means 50 are preferred according to the invention as long as they guarantee the function of the adjusting mechanism according to the invention. Correspondingly, it is also preferred according to the invention to vary the size of the circular arc-like segment 54 which engages the teethed ring 20. The size of the circular arc-like segment 54 respectively the size of the plane 56 abutting the teethed ring 20 is determined in this connection dependent on the forces to be transmitted. It is also preferred according to the invention to vary the number of guiding arms 58 symmetrically arranged at each engaging means 50 in the preferred shape according to the invention. While choosing the number of guiding arms 58, preferably according to the invention the available space in the adjusting mechanism and the required stability of the engaging means 50 is considered.

Preferably according to the invention, the guiding arms 58 serve for the guiding of the engaging means 50 along the linear way determined by the complementary shaped guidings 74 in the guiding plate 70. This linear way leads preferably according to the invention in radial direction starting from the pivot axis of the first shaft 30. It is however also preferred according to the invention to arrange this linear way in an inclined orientation to the radius or to realize a curvilinear run in case in this manner the function of the adjusting mechanism is supported.

Preferably according to the invention, the guiding plate 70 is rotatably mounted on the first shaft 30. The guiding plate 70 preferably not permanently rotates according to the invention together with the first shaft 30. It can rotate with the same if the connection between the engaging means 50 and the second adjusting means 20 is realized. The preferred function according to the invention of the guiding plate 70 consists in the guiding and the mounting of the engaging means 50.

As already described above, the engaging means 50 moves from an initial position to an end position in which it is connected to the second adjusting means 20. This motion is realized by the rotation of the first adjusting means 40, preferably by the effect of the cam-like projection 42. The motion of the engaging means 50 in the opposite direction, i.e. from its end position to the initial position, is realized by the effect of reset springs 60. Preferably according to the invention, two reset springs 60 are used for the two symmetrically arranged engaging means 50 wherein these reset springs 60 are also symmetrically arranged. Beside the arrangement of the two reset springs 60 also only one reset spring 60 or other spring shapes are preferred according to the invention as long as they provide the same function. The reset springs 60 are preferably according to the invention mounted on the mounting element 59 of the engaging means 50.

Preferably according to the invention, the guiding plate 70 comprises two limiting projections 72 wherein the number of the limiting projections 72 can be also varied. These limiting projections 72 limit the maximum possible adjusting way executed by one step of the adjusting mechanism. These limiting projections 72 run in guiding openings 92 which are preferably arranged according to the invention in a first housing half 90 in the shape of arc-like elongated holes. In a middle position within the elongated hole 92, the limiting projections 72 project through the housing half 90. Based on this arrangement, the same adjusting way is provided in both opposite rotation directions. In order to retain the limiting projections 72 in this middle position and in order to always reset the guiding plate 70 in this middle position by means of the limiting projections 72, these limiting projections 72 are respectively connected to a positioning spring 80. This positioning spring 80 is on the one hand mounted on the limiting projection 72 and on the other hand on the housing half 90. Both preferred positioning springs 80 according to the invention act in opposite directions and enable in this manner a reset to the middle position independent in which direction the adjusting mechanism was actuated. The mounting of the positioning spring 80 in the housing half 90 is realized by means of the window 94 arranged therein. The positioning spring 80 additionally guarantee that the guiding plate 70 does not rotate with the first shaft 30 during the linear motion of the engaging means 50. Only if the engaging means 50 is connected to the teethed ring 20, the guiding plate 70 rotates together with the first shaft 30 against the force of the positioning springs 80.

The teethed ring 20 already discussed above or the second adjusting means 20 is merely accurately guided in a second housing half 95. This second housing half 95 also comprises a central opening 99 through which the second shaft 10 runs. This second shaft 10 is connected to the teethed ring 20 or to the second adjusting means 20 and it transmits the adjusting motion of the adjusting mechanism to the support structure of the seat of a vehicle. Preferably according to the invention, the housing halves 90, 95 enclose the adjusting mechanism and provide in this manner a protecting function. The protection is realized in view of contaminations penetrating from the outside or in view of chemical and mechanical damage which reduce the working life of the adjusting mechanism according to the invention.

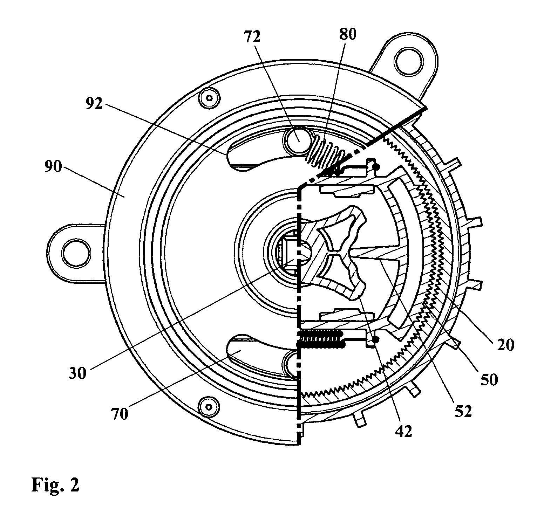

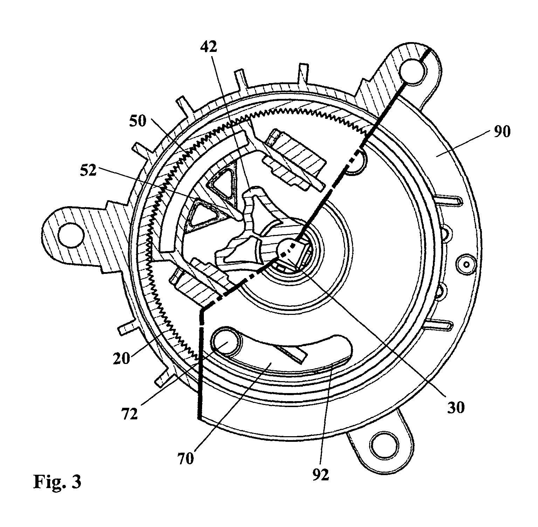

With reference to the Figures 2 and 3, in the following the course of motion within the adjusting mechanism according to the invention is described. Figure 2 shows the adjusting mechanism according to the invention in the initial position in a plan view to the housing half 90. It can be seen in Figure 2 that the limiting projections 72 are positioned in the middle position within the arc-shaped elongated holes 92. In this position, they are retained by means of the positing springs 80. It is also obvious from Figure 2 that in this initial position the engaging cam 52 is arranged in the recess 44 of the first adjusting means 40 so that the engaging means 50 does not form a positive connection with the teethed ring 20.

In case the first adjusting means 40 is rotated by means of the first shaft 30 in one of the two possible directions, the engaging cam 52 moves along the circumferential configuration of the first adjusting means 40. That means that the engaging cam 52 moves out of the recess 44 along the cam-like projection 42 until the engaging means 50 establishes a positive connection with the teethed ring 20. The engaging means 50 is now positioned in an end position and the linear movement of the engaging means 50 used for the coupling of the first shaft 30 to the second shaft 10 is finished. Preferably according to the invention, the remaining possible rotation of the first shaft 30 and therefore of the first adjusting means 40 is used for an adjustment of the teethed ring 20 and therefore of the second shaft 10. This part of the rotation is transmitted to the support structure to be adjusted in a seat of a vehicle.

The adjustment way which can be transmitted to the teethed ring 20, is limited by the length of the arc-like elongated hole 22 for guiding the limiting projections 72 of the guiding plate 70. As soon as the limiting projections 72 reach the end of the arc-like elongated hole 92, as shown in Fig. 3, the adjusting step is finished and the lever is relieved by the actuating person. By means of the positioning springs 80, the guiding plate 70 is moved back to the middle position. Previously, a backward movement of the engaging means 50 is realized via the guidings 72, 58 and the reset springs 60 so that the engaging cam 52 is no longer pressed in the direction of the teethed ring 20 by means of the cam-like projection 42. The engaging cam 52 is now again arranged in the recess 44 so that the engaging means 50 are commonly moved backwardly to the middle position or the initial position together with the guiding plate 70 and the first shaft 30 with the lever (not shown) by means of the positioning springs 80. As soon as this position is reached, a new adjustment step can be carried out in one of the two adjusting directions by means of the adjusting mechanism.

Based on the arc-like elongated holes 92, a maximum adjustment angle per step of preferably according to the invention 45° is realized in both directions. This adjustment angle can be varied as required without interfering with the function of the adjusting mechanism according to the invention.

Preferably according to the invention, the adjusting mechanism is connected to a shifting unit 100 for the support structure in the seat of a vehicle. This shifting unit 100 comprises a spindle having two opposed threads on which a nut is moved respectively. These nuts are for example connected to bowden cables and they move dependent on the rotation of the spindle in the direction to each other or away from each other. By means of this motion in the direction to each other or away from each other, the support structure is adjusted in a desired manner in order to adapt the same to the requirements of the seated person.

## Claims

1. An adjusting mechanism for a support structure of a seat of a vehicle comprising:
a. a first rotatable adjusting means (40) and at least one engaging means (50) displaceable by means of the rotation of the adjusting means (40) from an initial position to an end position in such a way that
b. the engaging means (50) engages a second rotatable adjusting means (20) in said end position wherein by the rotation of said first adjusting means (40), first the engaging means (50) is engageable with said second adjusting means (20) by a linear motion and then the second adjusting means (20) is adjustable.

2. The adjusting mechanism according to claim 1, wherein the first adjusting means (40) comprises at least one cam-like projection (42) and at least one recess (44) so that the engaging means (50) engages in an initial position with a first projection (52) into said recess (44) of said first adjusting means (40) and in an end position with at least a second projection (56) into said second adjusting means (20) wherein by the rotation of said first adjusting means (40), the engaging means (50) is engageable with said second adjusting means (20) by means of the cooperation of the cam-like projection (42) with said first projection (52) of said engaging means (50).

3. The adjusting mechanism according to claim 2, wherein the second projection (56) of the at least one engaging means (50) is a first teethed profile (56) complementary shaped to a second teethed profile (22) of the second adjusting means (20).

4. The adjusting mechanism according to one of the preceding claims, wherein the second adjusting means (20) is bowl-like configured having a bowl bottom (24) and a bowl edge (26) for receiving the first adjusting means (40) and the at least one engaging means (50).

5. The adjusting mechanism according to claim 4, wherein the second teethed profile (22) is arranged at the inner side of the bowl edge (26).

6. The adjusting mechanism according to one of the preceding claims, further comprising a first rotatable shaft (30) rigidly connected to the first adjusting means (40) on which a guiding plate (70) is rotatably mounted at which the at least one engaging means (50) is guided.

7. The adjusting mechanism according to claim 6, wherein the at least one engaging means (50) at the guiding plate (70) is resettable by means of at least one reset spring (60) from the end position to the initial position.

8. The adjusting mechanism according to claim 6 or 7, wherein the guiding plate (70) comprises at least one limiting projection (72) limiting the rotation of the guiding plate (70) around the first shaft (30).

9. The adjusting mechanism according to claim 8, further comprising a housing (90, 95) having at least one arc-like guiding opening (92) receiving the at least one limiting projection (72) whereby the rotation of the guiding plate (70) is limited in both directions.

10. The adjusting mechanism according to claim 9, further comprising at least one positioning spring (80) connected to the housing (90, 95) and the at least one limiting projection (72) in order to position the guiding plate (70).

11. The adjusting mechanism according to one of the preceding claims, wherein the second adjusting means (20) is connected to a second shaft (10) by means of which the support structure is adjustable.

12. A method for adjusting a support structure in a seat of a vehicle, comprising the following steps:
a. rotating a first adjusting means (40) having at least one cam-like projection (42) from an initial position around a first angle so that an engaging means (50) cooperating with said cam-like projection (42) is displaced from an initial position to an end position by a linear motion and thereby a connection between said first (40) and a second adjusting means (20) is realized, and
b. rotating said first adjusting means (40) around a second angle, so that said second adjusting means (20) is displaced together with said first adjusting means (40).
